# EUROPEAN PATENT SPECIFICATION

(11) **EP 4 456 306 B1**
(45) Date of publication and mention of the grant of the patent: **03.06.2026**
(21) Application number: 22921404.4
(22) Date of filing: 23.06.2022
(51) Int. Cl.: H01M 50/443, H01M 50/403, H01M 50/426, H01M 50/46, H01M 50/451, H01M 50/491

(54) **SEPARATOR HAVING EXCELLENT BONDING PERFORMANCE AND AIR PERMEABILITY AND PREPARATION METHOD THEREFOR**
SEPARATOR MIT HERVORRAGENDER VERBINDUNGSLEISTUNG UND LUFTDURCHLÄSSIGKEIT UND HERSTELLUNGSVERFAHREN DAFÜR
SÉPARATEUR AYANT UNE EXCELLENTE PERFORMANCE DE LIAISON ET UNE EXCELLENTE PERMÉABILITÉ À L'AIR ET SON PROCÉDÉ DE PRÉPARATION

(30) Priority: 20.01.2022 CN 202210064002
(43) Date of publication of application: 30.10.2024
(73) Proprietor: Jiangsu Advanced Material Tech Co., Ltd, Changzhou, Jiangsu 213300 (CN); Dongguan Advanced Electronic Technology Co., Ltd, Dongguan, Guangdong 523460 (CN); Katop Automation Co., Ltd, Shenzhen, Guangdong Province 518118 (CN)
(72) Inventor: WEI, Xingqiang, Changzhou, Jiangsu 213300 (CN); WANG, Xiaoming, Changzhou, Jiangsu 213300 (CN); SUN, Dongyue, Changzhou, Jiangsu 213300 (CN); ZHANG, Lei, Changzhou, Jiangsu 213300 (CN); XU, Qiang, Changzhou, Jiangsu 213300 (CN)
(74) Representative: Bradley, Josephine Mary
(86) International application number: PCT/CN2022/100680
(87) International publication number: WO 2023/137973

(56) References cited:
- WO-A1-2021/174709
- CN-A- 109 148 798
- CN-A- 110 911 622
- CN-A- 111 954 943
- CN-A- 114 094 283
- JP-A- 2003 109 570
- KR-A- 20160 118 979
- US-A1- 2020 227 711

## Description

### CROSS-REFERENCE TO RELATED APPLICATION

The present invention claims the priority to the Chinese patent application with the filing No. 2022100640021 filed with the Chinese Patent Office on January 20, 2022 and entitled "SEPARATOR HAVING BOTH EXCELLENT BONDING PROPERTY AND AIR PERMEABILITY AND PREPARATION METHOD THEREFOR".

### TECHNICAL FIELD

The present invention relates to the field of lithium battery technologies, and particularly to a separator having both excellent bonding property and air permeability and a preparation method therefor.

### BACKGROUND ART

A lithium ion battery generally includes a positive electrode, a negative electrode, a separator and an electrolyte. As a key component, the separator can prevent short circuit of the positive and negative electrodes of the lithium ion battery, provide a channel for transporting ions, and can prevent occurrence of accidents by blocking transmission of lithium ions through closed pores in a runaway condition. Therefore, researches on improving safety, usability and manufacturability of the lithium ion battery by improving properties of the separator have attracted more and more attention.

CN 110911622 A discloses a coating slurry for separator, a composite separator and a preparation method of the composite separator. The composite separator comprises a ceramic base film and a PVDF annulardot-shaped coating coated on one surface or two surfaces of the ceramic base film, wherein the PVDF annular dot-shaped coating is prepared from annular dot-shaped coating separator slurry.

US 2020227711 A1 discloses a separator for a rechargeable battery, including a porous substrate, and a coating layer including a plurality of annular patterns on at least one surface of the porous substrate. The annular patterns may include a plurality of polymer microparticles, the annular patterns may have an average particle diameter (D50) of about 50 µm to about 500 µm, and rings of the annular patterns may have a ring width of about 5 µm to about 50 µm.

WO 2021174709 A1 discloses a spray separator for a lithium ion battery. The spray separator comprises a porous base film, an inorganic heat-resistant coating coated on one side of the base film, and an organic particle dot-like coating sprayed on the inorganic heat-resistant coating side and the other side of the base film.

In a case of manufacturing a rechargeable lithium battery, if electrodes are not properly bound (combined) with the separator, during charge and discharge of the battery, the positive electrode and the negative electrode will repeatedly contract and expand, which may cause deformation of the battery and sharp rise of an internal temperature of the lithium battery due to uneven reaction of the battery, the temperature rising to 400 °C to 500 °C in a short time, thereby bringing about short circuit of the lithium battery, and resulting in damage of the lithium battery.

Regarding defects of the conventional separator, researchers coat an inorganic oxide Al₂O₃ or the like on a surface of an existing polyolefin separator to improve high-temperature resistance of the separator. However, such a separator has no strong adhesion with positive and negative electrode plates, and in a cycling process, the separator is easy to separate from the positive and negative electrodes, so that performance of the battery is degraded.

Therefore, there is an urgent need to develop a composite separator, which can maintain thermal shrinkage property of the existing separators, satisfy the bonding strength between the separator and the electrode plates and improve air permeability of the separator.

### SUMMARY

The present invention provides a separator having both excellent bonding property and air permeability, including: a base film and a bonding layer, wherein the bonding layer is provided on at least one surface of the base film, the bonding layer includes a plurality of hollowed-out structures and a binder, each of the hollowed-out structures is fixed on a surface of the base film, and the hollowed-out structure is formed by a protruded portion surrounding a hollowed-out portion. Protruded portions provide adhesion between the separator and positive and negative electrode plates.

In order to further improve the adhesion, taking the surface of the base film as a horizontal plane, a cross-section of the protruded portion perpendicular to the surface of the base film is of a ridge-like accumulating structure.

Specifically, after the protruded portion is enclosed, a vertical section between an inner wall and an outer wall thereof is of the ridge-like accumulating structure.

The protruded portions include: primary particles and secondary particles, wherein the primary particles are PVDF particles, the secondary particles are spherical particles formed by accumulating the primary particles, and the secondary particles are accumulated to form the ridge-like accumulating structure. A particle size of the primary particles is 50~500 nm, and a particle size of the secondary particles formed by accumulating the primary particles is 0.5~20 µm.

In an embodiment, the ridge-like accumulating structure is formed by accumulating the secondary particles, of which a particle size D50 is 0.5~20 µm, preferably 2~10 µm. The secondary particles are in this interval, so that it is beneficial to accumulated height of the particles, the particles have large gaps therebetween, and it facilitates reducing thickness of the separator after the hot pressing and maintaining air permeability of the separator. If the secondary particles are too small, the particles have small gaps therebetween and are tightly accumulated, so that pores of the separator are blocked, it is hard for electrolytic solution to infiltrate, and it is difficult to compress and deform, and reduce the thickness of the separator after the hot pressing. If the secondary particles are too large, they are difficult to prepare and easy to break and settle in a dispersion system.

In an embodiment, the secondary particles are formed by accumulating primary particles with particle size D50 of 50~500 nm, preferably, 150~300 nm. In this interval, the primary particles are stable and easy to realize. For primary particles with a smaller diameter, a large amount of emulsifier needs to be added in synthesis, which increases costs, and particles with a larger diameter are unstable and easy to settle.

In an embodiment, in order to better improve the thermal shrinkage of the separator of the present invention, the separator having both excellent bonding property and air permeability of the present invention further includes an inorganic-particle layer, wherein the inorganic-particle layer is provided on the base film, and the inorganic-particle layer is located between the bonding layer and the base film.

In an embodiment, the hollowed-out portions are in an oval shape, and a mean value of long axes of several ellipses is in a range of 50~1000 µm. The mean value of the long axes are in this interval, so that height uniformity of the ridge-like accumulating structure can be improved, so as to ensure the bonding strength between the separator and the electrode plates, and improve overall stability of the battery. In an embodiment, the mean value of long axes of several ellipses is in a range of 400~600 µm.

In an embodiment, the hollowed-out portions are in an irregular shape, and a mean value of an equivalent circle diameter of the irregular shape is in a range of 50~1000 µm.

In an embodiment, a height of the protruded portions is in a range of 2~15 µm. In an embodiment, the number of accumulated layers of the secondary particles is 3~5. The height of the protruded portions is in this interval, so that the bonding strength between the separator and the electrode plates can be ensured, and thus the overall stability of the battery is improved. In an embodiment, the height of the protruded portions is in a range of 5~10 µm.

In an embodiment, a loading amount of the bonding layer is 0.2~4 g/m².

In an embodiment, the loading amount of the bonding layer is 0.58~1.66 g/m².

The present invention further provides a preparation method for a separator having both excellent bonding property and air permeability, including following steps:
S1, preparing primary particles of PVDF by emulsion polymerization, a particle size D50 of the primary particles being 50~500 nm, and polymerizing the primary particles into secondary particles, a particle size D50 of the secondary particles being 0.5~20 µm; S2, mixing the secondary particles, a binder, and deionized water according to pre-set weight proportions, and stirring the same to form a uniform adhesive slurry; S3, spraying the adhesive slurry onto a single surface of the base film by using a rotary spraying head, wherein a spraying flow of the rotary spraying head is 50~500 mL/min, and a rotational speed of the rotary spraying head is 1000~20000 rpm; and S4, sufficiently drying coated separator at a temperature of 60~80 °C, wherein the coated adhesive slurry is formed into a bonding layer after drying, and the separator is rendered after the drying.

In an embodiment, a solid content of the adhesive slurry is 10%~30%, and a mass of the binder accounts for 1%~20% of a mass of the secondary particles.

In an embodiment, the solid content of the adhesive slurry is 10%~20%, and the mass of the binder accounts for 1%~7.5% of the mass of the secondary particles.

In an embodiment, in order to further improve bonding performance of the adhesive slurry, PMMA microspheres are further added in step S2, a particle size D50 of the PMMA microspheres being 1~15µm, and a uniform adhesive slurry is formed by stirring.

In an embodiment, the particle size D50 of the PMMA microspheres is 1~5.8 µm.

In an embodiment, an end surface of the separator provided with the bonding layer and an electrode plate are attached and then subjected to hot pressing, and part of protruded portions on the bonding layer, upon the hot pressing, are transferred from the base film onto the electrode plate, wherein an area of the protruded portions transferred onto the electrode plate accounts for 1%~20% of an area of the electrode plate.

In an embodiment, the area of the protruded portions transferred onto the electrode plate accounts for 5%~15% of the area of the electrode plate.

In an embodiment, in step S2, a stirring speed of the stirring for forming the uniform adhesive slurry is 700 rpm.

In the preparation method for a separator having both excellent bonding property and air permeability of the present invention, the particle size of the primary particles of PVDF is defined, the secondary particles are prepared by spray-granulation, the slurry is prepared through corresponding proportions, and the rotational speed and spraying flow of the spraying are controlled, so that the sprayed slurry can form the hollowed-out structures on the base film; and as space is left between the secondary particles and in the secondary particles, after the hot pressing, the thickness of the separator can be effectively reduced, and wettability of the separator can be ensured.

For the separator having both excellent bonding property and air permeability of the present invention, after the hot pressing, while the bonding effect is ensured by the adhesion between the separator and the electrode plates provided by the protruded portions, due to the hollowed-out structures inside, the air permeability of the separator is effectively ensured.

Moreover, by the spraying method of the present invention, most of the sprayed (coated) protruded portions are enclosed into an oval shape, and the protruded portions have small cross-overlapping ranges therebetween, thus ensuring uniformity between the protruded portions and further ensuring bonding stability.

### BRIEF DESCRIPTION OF DRAWINGS

In order to more clearly illustrate the technical solutions of the embodiments of the present invention, the drawings which need to be used in the embodiments will be briefly introduced below. It should be understood that the following drawings only exemplify the embodiments of the present invention, dimensional proportions in the drawings do not directly correspond to true proportions in the embodiments, and meanwhile, the following drawings only show some embodiments of the present invention, and thus should not be regarded as limitation to the scope.
FIG. 1 is a schematic view of a separator having both excellent bonding property and air permeability of the present invention; and
FIG. 2 is a longitudinal cross-sectional view of the separator having both excellent bonding property and air permeability of the present invention.

Reference signs:
10-base film; 20-hollowed-out structure; 21-protruded portion; 22-hollowed-out portion; 211-primary particle; 212-secondary particle.

### DETAILED DESCRIPTION OF EMBODIMENTS

Advantages of the embodiments of the present invention in SUMMARY will be partially set forth in the following DETAILED DESCRIPTION OF EMBODIMENTS of the description, and partially obvious according to the description, or may be learned by part of the embodiments of the present invention.

The technical solutions of the present invention are further described below in combination with drawings and some embodiments.

In order to make the objectives, technical solutions and advantages of the present invention more clear and understandable, the present invention is further described in detail below in combination with the drawings and embodiments. It should be understood that the embodiments described herein are merely illustrative of the present invention and are not intended to limit the present invention. Besides, technical features involved in various embodiments of the present invention described below may be combined with each other as long as they do not conflict with each other.

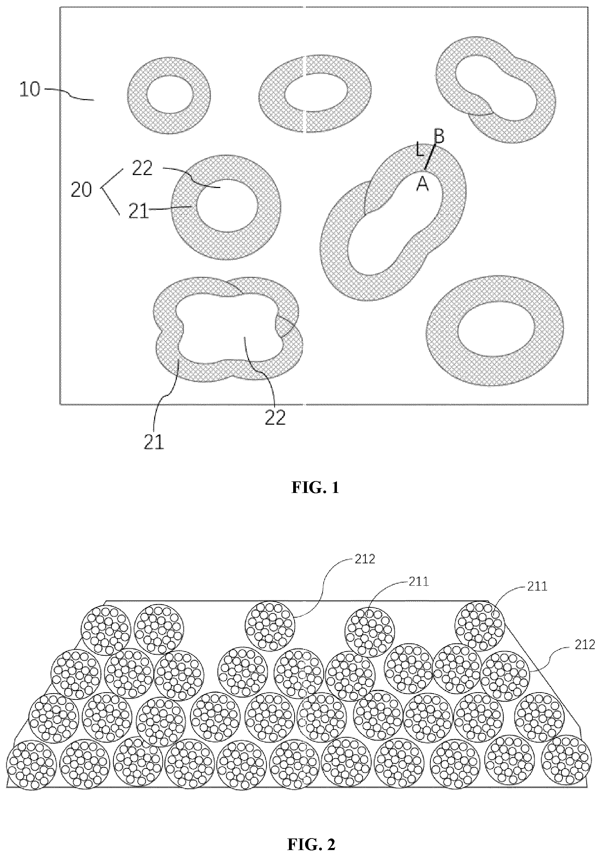

As shown in FIG. 1 and FIG. 2, in accordance with an optimal embodiment of the present invention, provided is a separator having both excellent bonding property and air permeability, including: a base film 10 and a bonding layer, wherein the bonding layer is provided on at least one surface of the base film 10, and the bonding layer includes a plurality of hollowed-out structures 20, wherein each hollowed-out structure 20 is fixed on the surface of the base film 10, and the hollowed-out structure 20 is formed by a protruded portion 21surrounding a hollowed-out portion 22; and taking the surface of the base film 10 as a horizontal plane, a longitudinal section of the protruded portion 21 is of a ridge-like accumulating structure.

In an embodiment, after the protruded portion 21 is enclosed, any point on an inner wall of the protruded portion 21 is set as a point A, any point on an outer wall of the protruded portion 21 is set as a point B, the point A and the point B are connected to form a line segment L, and a longitudinal section passing through the line segment L is of the ridge-like accumulating structure.

In an embodiment, the protruded portions 21 include primary particles 211 and secondary particles 212.

In an embodiment, the primary particles 211 are PVDF particles, the secondary particles 212 are spherical particles formed by accumulating the primary particles 211, and the secondary particles 212 are accumulated to form the ridge-like accumulating structure. A particle size D50 of the primary particles 211 is 50~500 nm, and a particle size D50 of the secondary particles 212 formed by accumulating the primary particles 211 is 0.5~20 µm.

In an embodiment, the separator having both excellent bonding property and air permeability of the present invention further includes an inorganic-particle layer, wherein the inorganic-particle layer is provided on the base film 10, and the inorganic-particle layer is located between the bonding layer and the base film 10.

In an embodiment, the hollowed-out portions 22 may be formed in a variety of shapes, such as oval and irregular shapes.

In an embodiment, the hollowed-out portions 22 are in an oval shape, and a mean value of long axes of several ellipses is in a range of 50~1000 µm.

In an embodiment, the hollowed-out portions are in an irregular shape, and a mean value of an equivalent circle diameter of the irregular shape is in a range of 50~1000 µm.

In an embodiment, the hollowed-out portions are in an irregular shape and/or regular ring pattern. Mean values of equivalent circle diameters of the irregular shape and the regular ring pattern are in a range of 50~1000 µm, respectively.

In an embodiment, the hollowed-out portions are free of adhesive polymer particles.

In an embodiment, a small amount of primary particles and/or secondary particles are dispersed in the hollowed-out portions.

In an embodiment, a height of the protruded portions 21 is in a range of 2~15 µm, and a loading amount of the bonding layer is 0.2~4 g/m².

The present invention further provides a preparation method for a separator having both excellent bonding property and air permeability, including the following steps:
S1, preparing primary particles 211 of PVDF by emulsion polymerization, a particle size D50 of the primary particles 211 being 50~500 nm, and polymerizing the primary particles 211 into secondary particles 212, a particle size D50 of the secondary particles 212 being 0.5~20 µm; S2, mixing the secondary particles 212, PMMA microspheres, a binder, and deionized water according to pre-set weight proportions, and stirring the same to form a uniform adhesive slurry wherein a particle size D50 of the added PMMA microspheres is 1~15 µm, a mass of PMMA accounts for 5%~30% of a mass of PVDF, a solid content of the adhesive slurry is 10%~30%, a mass of the binder accounts for 1%~20% of a mass of the secondary particles 212; S3, spraying the adhesive slurry onto a single surface of the base film 10 by using a rotary spraying head, wherein a spraying flow of the rotary spraying head is 50~500 mL/min, and a rotational speed of the rotary spraying head is 1000~20000 rpm; and S4, sufficiently drying coated separator at a temperature of 60-80 °C, wherein the coated adhesive slurry is formed into a bonding layer after drying, and the separator is rendered after the drying.

An end surface of the separator provided with the bonding layer and an electrode plate are attached and then subjected to hot pressing. Part of protruded portions 21 on the bonding layer, upon the hot pressing, are transferred from the base film 10 onto the electrode plate, wherein an area of the protruded portions 21 transferred onto the electrode plate accounts for 1%-20% of an area of the electrode plate.

The principle is as follows.

The adhesive slurry of the present invention is prepared, and the adhesive slurry is sprayed on the surface of the base film by a specific spraying method. The sprayed adhesive slurry is centrifugally atomized through spraying parameters. Liquid drops move and collide with the separator and spread on the surface of the separator. In a drying process of the liquid drops, inner particles are brought to edges of the liquid drops under the action of capillary flow, so that edge aggregation of secondary particles is realized, and a plurality of hollowed-out structures with a hollowed-out portion are formed by the protruded portions.

The hollowed-out structures are evenly distributed on the separator. After the hot pressing, the separator is bonded with the electrode plate. As the protruded portions of the hollowed-out structures have a low coverage rate, the air permeability of the separator is almost not affected.

Moreover, the present invention can render a coating with relatively concentrated distribution of heights of the protruded portions through the spraying parameters and ensure uniformity of heights of the protruded portions, and the heights between the protruded portions are homogeneous and smooth, so that a bonding effect between the electrode plate and the separator is good.

Therefore, the separator having both excellent bonding property and air permeability and the preparation method therefor of the present invention can ensure high air permeability thereof while ensuring the bonding effect, and improve comprehensive performance of the separator.

Specifically, in the present invention, one method of preparing the secondary particles 212 from the primary particles 211 is as follows. Into a 5 L polymerization kettle are added deionized water and perfluorooctanoic acid ammonium emulsifier, then PVDF monomers are introduced in a nitrogen atmosphere, when the kettle is heated to a temperature of 90 °C and a kettle pressure reaches 1.7 MPa, an initiator and a chain transfer agent are added through an auxiliary pump to start a polymerization reaction for 24 h under mechanical stirring. After the reaction is finished, material liquid is cooled to a room temperature, and unreacted gases are released, to render uniform polymerized emulsion, being the primary particles 211 of PVDF. The polymerized emulsion is coagulated, washed, sprayed and dried, and sieved to render the secondary particles 212 of PVDF with a target dimension.

### Example 1:

### S1, Preparing secondary particles 212

Primary particles 211 of PVDF were prepared by emulsion polymerization, D50 being 240 nm, and the primary particles were washed, sprayed, dried, and sieved to render secondary particles 212 of PVDF, wherein a particle size D50 of PVDF powder was 6.2 µm.

### S2, Preparing an adhesive slurry

A binder solution had a mass fraction of 15%, and a binder was styrene-butadiene latex. PVDF, the binder and deionized water were mixed and stirred to form uniform slurry, wherein a rotational speed of a stirrer was 700 rpm, a solid content of the slurry was 20%, and the binder accounted for 7.5% of a mass of PVDF.

S3, Spraying

The slurry was uniformly sprayed on a single surface of a 9-micron PE base film 10, wherein a flow of a single rotatory spraying device was 150 mL/min, and a rotational speed was 10000 rpm.

### S4, Drying to render a separator B1

Coated separator was placed in an oven and sufficiently dried at 60 °C, to render the separator B1 after drying, wherein a loading amount of a polymer coating was 0.59 g/m².

### Example 2: (not according to the invention)

Different from Example 1, the primary particles 211 were not accumulated to form secondary particles 212 of PVDF, but were directly used for subsequent preparation of spraying slurry, and other steps were unchanged, to render a separator B2, wherein the loading amount of the polymer coating after drying was 0.64 g/m².

### Example 3:

Different from Example 1, the particle size D50 of prepared primary particles 211 of PVDF was 100 nm, the particle size D50 of prepared secondary particles 212 of PVDF was 2.0 µm, and other steps were unchanged, to render a separator B3, wherein the loading amount of the polymer coating after drying was 0.58 g/m².

### Example 4:

Different from Example 1, the particle size D50 of prepared primary particles 211 of PVDF was 500 nm, the particle size D50 of prepared secondary particles 212 of PVDF was 15 µm, and other steps were unchanged, to render a separator B4, wherein the loading amount of the polymer coating after drying was 0.62 g/m².

### Example 5: (not according to the invention)

Different from Example 1, ethanol was added in the process of preparing the adhesive slurry, PVDF, the binder, the deionized water, and ethanol were mixed according to a weight ratio of 20:10:65:5, and other steps were unchanged, to render a separator B5, wherein the loading amount of the polymer coating after drying was 0.61 g/m².

### Example 6: (not according to the invention)

Different from Example 1, in the step of preparing the adhesive slurry, the binder was a mixture of acrylic acid and an acrylate polymer, surfactant of 0.5% of the slurry was added, and other steps were unchanged, to render a separator B6, wherein the loading amount of the polymer coating was 0.59 g/m² after drying.

### Example 7: (not according to the invention)

Different from Example 1, in step 2, the stirring speed was 1500 rpm, and other steps were unchanged, to render a separator B7, wherein the loading amount of the polymer coating after drying was 0.60 g/m².

### Example 8: (not according to the invention)

Different from Example 1, in step 3, the rotational speed of the rotary spraying device was 1000 rpm, and other steps were unchanged, to render a separator B8, wherein the loading amount of the polymer coating after drying was 0.58 g/m².

### Example 9:

Different from Example 1, in step 3, the rotational speed of the rotary spraying device was 20000 rpm, and other steps were unchanged, to render a separator B9, wherein the loading amount of the polymer coating after drying was 0.60 g/m².

### Example 10: (not according to the invention)

Different from Example 1, in step 3, flow of a single rotatory spraying device was 400 mL/min, and other steps were unchanged, to render a separator B10, wherein the loading amount of the polymer coating after drying was 1.66 g/m².

### Example 11:

Different from Example 1, in step 2, PVDF, PMMA, the binder, and the deionized water were mixed, where the particle size D50 of PMMA was 5.8 µm and a dry weight ratio of PVDF to PMMA was 8/2, and other steps were unchanged, to render a separator B11, wherein a loading amount of the polymer coating after drying was 0.60 g/m².

Obtained separators B1-B11 were tested, and obtained data are shown in Table 1 below:

**Table 1**

| Code Name of Separator | Structure | Equivalent Circle Diameter of Ring (containing in-ring part, µm) | Average Height of Ring (µm) |
|---|---|---|---|
| B1 | Particles formed closed ring | 430 | 11.2 |
| B2 | Particles formed closed ring | 170 | 1.6 |
| B3 | Particles formed closed ring | 230 | 3.2 |
| B4 | Particles formed closed ring | 500 | 32 |
| B5 | Particles were distributed dispersedly | \ | \ |
| B6 | Particles were formed in a cake shape | 450 | 7.2 |
| B7 | Particles formed closed ring and there were many particles in the ring | 440 | 9.6 |
| B8 | Particles were distributed unevenly | \ | \ |
| B9 | Particles formed closed ring | 320 | 10.2 |
| B10 | Particles were distributed unevenly and rarely formed closed ring | \ | \ |
| B11 | Particles formed closed ring | 440 | 10.9 |

Example 1 is an optimal embodiment of the present invention. For the separator B1, the PVDF particles thereof were 5~6 µm secondary particles 212, and the dimension and height obtained by the protruded portions 21 were both moderate, with the height being around 11 µm, and in this case, after the separator was hot-pressed with the electrode plate, thickness would be decreased to 1~2 µm. In B2, PVDF was nanoparticles, and had the protruded portions 21, which could be enclosed to form closed rings on the surface of the separator, but an enclosed dimension was small, and height of the rings was low. In B3, the formed secondary particles 212 had a small particle size, and thus the dimension and height obtained by the formed protruded portions 21 were both small. In B4, the dimension and height obtained by too large secondary particles 212 of PVDF were too large, and thickness after hot pressing could not be reduced to a required thickness of the battery. In B5, ethanol was added, so that surface tension of the liquid drops was reduced, the liquid drops sputtered when impacting the surface of the separator, and thus the particles were distributed dispersedly. In B6, due to change of components, a transportation mode of internal particles was changed when the liquid drops were dried, so that the particles more uniformly settled at bottom of the liquid drops. In B7, as the stirring speed was too high, the secondary particles 212 of PVDF were broken, so that it was difficult to transport these particles to an edge position of the rings in a process of drying the liquid drops. In B8, due to reduction of a rotational speed of a rotary spraying dispersion disc, the liquid drops formed by the slurry had wide particle size distribution and also large particle size, so that the liquid drops were unevenly distributed on the surface of the separator. In B9, the rotational speed of the dispersion disc was too high, the particle size of the liquid drops would be smaller, but the influence was not great. Phenomenon of B10 was similar to that of B8. In B11, PMMA particles were added, which obviously improved adhesion between the separator and the electrode plate.

Table 2 shows increase values of air permeability of the separators, bonding strength between the separators and the electrode plates, and proportions of effective bonding areas of the protruded portions 21 on surfaces of the electrode plates:

**Table 2**

| Code Name of Separator | Air-Permeability Increase (s/100 ml) | Bonding Strength (N/m) | Proportion of Effective Bonding Area |
|---|---|---|---|
| B1 | 3 | 2.6 | 12.5% |
| B2 | 12 | 0.6 | 5.3% |
| B3 | 5 | 1.2 | 9.3% |
| B4 | 2 | 3.1 | 16.3% |
| B5 | 2 | 0.1 | 1.2% |
| B6 | 18 | 0.8 | 13.2% |
| B7 | 2 | 1.6 | 10.2% |
| B8 | 5 | 1.2 | 8.9% |
| B9 | 2 | 1.3 | 9.0% |
| B10 | 26 | 3.3 | 20.6% |
| B11 | 2 | 3.2 | 13.5% |

### 1. Description of Test of Air Permeability Value:

Air permeability increase values of coating, i.e., time required for 100 mL air to pass through 1 square inch separator at a pressure of 1.22 kPa, in the present table, was tested by, but not limited to, Asahi Seiko air-permeability tester. The smaller the value, the better the air permeability, which is used to characterize transmission performance of lithium ions in a coated film. It can be obtained from the examples in Table 2 that, except B2, B6 and B10, other separators had little increase in air permeability, and they all had good air permeability.

### 2. Description of Test of Effective Bonding Area:

A surface of the separator having the protruded portions 21 of a ridge-like accumulating structure and a lithium iron phosphate positive electrode plate were hot-pressed at 1 MPa and 100 °C for 10 min, and then the separator and the electrode plate were separated, wherein a percentage of an area of regular ring patterns and irregular patterns formed by the protruded portions 21 transferred from the separator to the electrode plate in an area of the electrode plate is called as the effective bonding area.

It can be seen from Table 2 that the bonding layer of the present invention has almost no influence on the air permeability of the separator, the bonding strength and the proportion of the effective bonding area of the separator and the electrode plate are in strong positive correlation, and when the proportion of the effective bonding area is 5%~15%, the separator has better air permeability while better bonding strength can be obtained.

**In** conclusion, the separator having both excellent bonding property and air permeability and the preparation method therefor of the present invention maintain the thermal shrinkage property of the ceramic-coated separator, satisfy the bonding strength between the separator and the electrode plate through a low adhesive content, also maintain the good air permeability of the separator, and improve the comprehensive performance of the battery.

### INDUSTRIAL APPLICABILITY

In summary, the present invention provides a separator having both excellent bonding property and air permeability and a preparation method therefor. The separator having both excellent bonding property and air permeability and the preparation method therefor can ensure high air permeability while ensuring the bonding effect, and improve the comprehensive performance of the separator.

## Claims

1. A separator having both excellent bonding property and air permeability, **characterized by** comprising:
a base film (10); and
a bonding layer, wherein the bonding layer is provided on at least one surface of the base film (10), and the bonding layer comprises a plurality of hollowed-out structures (20) and a binder, each of the hollowed-out structures (20) is fixed on a surface of the base film (10), and the hollowed-out structure (20) is formed by a protruded portion (21) surrounding a hollowed-out portion (22);
taking the surface of the base film (10) as a horizontal plane, a cross-section of the protruded portion (21) perpendicular to the surface of the base film (10) is of a ridge-like accumulating structure; and
the protruded portions (21) comprise:
primary particles (211), wherein the primary particles (211) are PVDF particles; and
secondary particles (212), wherein the secondary particles (212) are spherical particles formed by accumulating the primary particles (211), and the secondary particles (212) are accumulated to form the ridge-like accumulating structure.

2. The separator having both excellent bonding property and air permeability according to claim 1, wherein a particle size D50 of the primary particles (211) is 50~500 nm, and a particle size D50 of the secondary particles (212) formed by accumulating the primary particles (211) is 0.5~20 µm.

3. The separator having both excellent bonding property and air permeability according to claim 1 or 2, further comprising:
an inorganic-particle layer, wherein the inorganic-particle layer is provided on the base film (10), and the inorganic-particle layer is located between the bonding layer and the base film (10).

4. The separator having both excellent bonding property and air permeability according to claim 1 or 2, wherein the hollowed-out portions (22) are in an oval shape, and a mean value of long axes of several ellipses is in a range of 50~1000 µm.

5. The separator having both excellent bonding property and air permeability according to claim 1, wherein the hollowed-out portions (22) are in an irregular shape, and a mean value of an equivalent circle diameter of the irregular shape is in a range of 50~1000 µm.

6. The separator having both excellent bonding property and air permeability according to any one of claims 1~5, wherein a height of the protruded portions (21) is in a range of 2~15 µm.

7. The separator having both excellent bonding property and air permeability according to claim 6, wherein the height of the protruded portions (21) is in a range of 5~10 µm.

8. The separator having both excellent bonding property and air permeability according to any one of claims 1~7, wherein a loading amount of the bonding layer is 0.2~4 g/m².

9. The separator having both excellent bonding property and air permeability according to claim 8, wherein the loading amount of the bonding layer is 0.58~1.66 g/m².

10. A preparation method for the separator having both excellent bonding property and air permeability according to any one of claims 1~9, **characterized by** comprising following steps:
S1, preparing the primary particles (211) of PVDF by emulsion polymerization, a particle size D50 of the primary particles (211) being 50~500 nm, and spray-granulating the primary particles (211) to prepare the secondary particles (212), a particle size D50 of the secondary particles (212) being 0.5~20 µm;
S2, mixing the secondary particles (212), a binder, and deionized water according to pre-set weight proportions, and stirring the same to form a uniform adhesive slurry;
S3, spraying the adhesive slurry onto a single surface of the base film (10) by using a rotary spraying head, wherein a spraying flow of the rotary spraying head is 50~500 mL/min, and a rotational speed of the rotary spraying head is 1000~20000 rpm; and
S4, sufficiently drying the coated separator at a temperature of 60~80 °C, wherein the coated adhesive slurry is formed into a bonding layer after drying, and the separator is rendered after the drying.

11. The preparation method for the separator having both excellent bonding property and air permeability according to claim 10, wherein a solid content of the adhesive slurry is 10%~30%, and a mass of the binder accounts for 1%~20% of a mass of the secondary particles (212),
preferably, the solid content of the adhesive slurry is 10%~20%, and the mass of the binder accounts for 1%~7.5% of the mass of the secondary particles (212).

12. The preparation method for the separator having both excellent bonding property and air permeability according to any one of claims 10~11, wherein PMMA microspheres are further added in step S2, a particle size D50 of the PMMA microspheres being 1~15µm, and a uniform adhesive slurry is formed by stirring,
preferably, the particle size D50 of the PMMA microspheres is 1~5.8 µm.

13. The preparation method for the separator having both excellent bonding property and air permeability according to claim 12, wherein an end surface of the separator provided with the bonding layer and an electrode plate are attached and then subjected to hot pressing, and part of protruded portions (21) on the bonding layer, upon the hot pressing, are transferred from the base film (10) onto the electrode plate, wherein an area of the protruded portions (21) transferred onto the electrode plate accounts for 1%~20% of an area of the electrode plate,
preferably, the area of the protruded portions (21) transferred onto the electrode plate accounts for 5%~15% of the area of the electrode plate.

14. The preparation method for the separator having both excellent bonding property and air permeability according to claim 10, wherein in step S2, a stirring speed of the stirring for forming the uniform adhesive slurry is 700 rpm.

## Patentansprüche

1. Separator mit sowohl ausgezeichneter Verbindungseigenschaft als auch Luftdurchlässigkeit, **dadurch gekennzeichnet, dass** er Folgendes umfasst:
einen Basisfilm (10); und
eine Verbindungsschicht, wobei die Verbindungsschicht auf mindestens einer Oberfläche des Basisfilms (10) bereitgestellt ist und die Verbindungsschicht mehrere ausgehöhlte Strukturen (20) und ein Bindemittel umfasst, wobei jede der ausgehöhlten Strukturen (20) auf einer Oberfläche des Basisfilms (10) fixiert ist und die ausgehöhlte Struktur (20) durch einen vorstehenden Abschnitt (21) gebildet ist, der einen ausgehöhlten Abschnitt (22) umgibt;
wobei, wenn die Oberfläche des Basisfilms (10) als eine horizontale Ebene angenommen wird, ein Querschnitt des vorstehenden Abschnitts (21) senkrecht zur Oberfläche des Basisfilms (10) eine rippenartige Akkumulationsstruktur aufweist; und
die vorstehenden Abschnitte (21) Folgendes umfassen:
Primärpartikel (211), wobei die Primärpartikel (211) PVDF-Partikel sind; und
Sekundärpartikel (212), wobei die Sekundärpartikel (212) kugelförmige Partikel sind, die durch Akkumulieren der Primärpartikel (211) gebildet werden, und die Sekundärpartikel (212) akkumuliert werden, um die rippenartige Akkumulationsstruktur zu bilden.

2. Separator mit sowohl ausgezeichneter Verbindungseigenschaft als auch Luftdurchlässigkeit nach Anspruch 1, wobei eine Partikelgröße D50 der Primärpartikel (211) 50 bis 500 nm beträgt und eine Partikelgröße D50 der Sekundärpartikel (212), die durch Akkumulieren der Primärpartikel (211) gebildet werden, 0,5 bis 20 µm beträgt.

3. Separator mit sowohl ausgezeichneter Verbindungseigenschaft als auch Luftdurchlässigkeit nach Anspruch 1 oder 2, der ferner Folgendes umfasst:
eine Schicht aus anorganischen Partikeln, wobei die Schicht aus anorganischen Partikeln auf dem Basisfilm (10) bereitgestellt ist und die Schicht aus anorganischen Partikeln zwischen der Verbindungsschicht und dem Basisfilm (10) angeordnet ist.

4. Separator mit sowohl ausgezeichneter Verbindungseigenschaft als auch Luftdurchlässigkeit nach Anspruch 1 oder 2, wobei die ausgehöhlten Abschnitte (22) eine ovale Form aufweisen und ein Mittelwert der langen Achsen mehrerer Ellipsen in einem Bereich von 50 bis 1000 µm liegt.

5. Separator mit sowohl ausgezeichneter Verbindungseigenschaft als auch Luftdurchlässigkeit nach Anspruch 1, wobei die ausgehöhlten Abschnitte (22) eine unregelmäßige Form aufweisen und ein Mittelwert eines äquivalenten Kreisdurchmessers der unregelmäßigen Form in einem Bereich von 50 bis 1000 µm liegt.

6. Separator mit sowohl ausgezeichneter Verbindungseigenschaft als auch Luftdurchlässigkeit nach einem der Ansprüche 1 bis 5, wobei eine Höhe der vorstehenden Abschnitte (21) in einem Bereich von 2 bis 15 µm liegt.

7. Separator mit sowohl ausgezeichneter Verbindungseigenschaft als auch Luftdurchlässigkeit nach Anspruch 6, wobei die Höhe der vorstehenden Abschnitte (21) in einem Bereich von 5 bis 10 µm liegt.

8. Separator mit sowohl ausgezeichneter Verbindungseigenschaft als auch Luftdurchlässigkeit nach einem der Ansprüche 1 bis 7, wobei eine Beladungsmenge der Verbindungsschicht 0,2 bis 4 g/m² beträgt.

9. Separator mit sowohl ausgezeichneter Verbindungseigenschaft als auch Luftdurchlässigkeit nach Anspruch 8, wobei die Beladungsmenge der Verbindungsschicht 0,58 bis 1,66 g/m² beträgt.

10. Herstellungsverfahren für den Separator mit sowohl ausgezeichneter Verbindungseigenschaft als auch Luftdurchlässigkeit nach einem der Ansprüche 1 bis 9, **dadurch gekennzeichnet, dass** es folgende Schritte umfasst:
S1, Herstellen der Primärpartikel (211) aus PVDF durch Emulsionspolymerisation, wobei eine Partikelgröße D50 der Primärpartikel (211) 50 bis 500 nm beträgt, und Sprühgranulieren der Primärpartikel (211), um die Sekundärpartikel (212) herzustellen, wobei eine Partikelgröße D50 der Sekundärpartikel (212) 0,5 bis 20 µm beträgt;
S2, Mischen von den Sekundärpartikeln (212), einem Bindemittel und entionisiertem Wasser gemäß voreingestellten Gewichtsanteilen und Rühren derselben, um eine gleichmäßige Klebstoffaufschlämmung zu bilden;
S3, Sprühen der Klebstoffaufschlämmung auf eine einzige Oberfläche des Basisfilms (10) unter Verwendung eines Rotationssprühkopfs, wobei ein Sprühfluss des Rotationssprühkopfs 50 bis 500 ml/min beträgt und eine Drehzahl des Rotationssprühkopfs 1000 bis 20000 U/min beträgt; und
S4, ausreichendes Trocknen des beschichteten Separators bei einer Temperatur von 60 bis 80 °C, wobei die beschichtete Klebstoffaufschlämmung nach dem Trocknen zu einer Verbindungsschicht gebildet wird und der Separator nach dem Trocknen hergestellt ist.

11. Herstellungsverfahren für den Separator mit sowohl ausgezeichneter Verbindungseigenschaft als auch Luftdurchlässigkeit nach Anspruch 10, wobei ein Feststoffgehalt der Klebstoffaufschlämmung 10 % bis 30 % beträgt und eine Masse des Bindemittels 1 % bis 20 % einer Masse der Sekundärpartikel (212) ausmacht, vorzugsweise der Feststoffgehalt der Klebstoffaufschlämmung 10 % bis 20 % und die Masse des Bindemittels 1 % bis 7,5 % der Masse der Sekundärpartikel (212) beträgt.

12. Herstellungsverfahren für den Separator mit sowohl ausgezeichneter Verbindungseigenschaft als auch Luftdurchlässigkeit nach einem der Ansprüche 10 bis 11, wobei in Schritt S2 ferner PMMA-Mikrokügelchen zugegeben werden, wobei eine Partikelgröße D50 der PMMA-Mikrokügelchen 1 bis 15 µm beträgt und eine gleichmäßige Klebstoffaufschlämmung durch Rühren gebildet wird, vorzugsweise die Teilchengröße D50 der PMMA-Mikrokügelchen 1 bis 5,8 µm beträgt.

13. Herstellungsverfahren für den Separator mit sowohl ausgezeichneter Verbindungseigenschaft als auch Luftdurchlässigkeit nach Anspruch 12, wobei eine Endfläche des Separators, die mit der Verbindungsschicht versehen ist, und eine Elektrodenplatte angebracht werden und anschließend Heißpressen unterzogen werden, und ein Teil der vorstehenden Abschnitte (21) auf der Verbindungsschicht beim Heißpressen von dem Basisfilm (10) auf die Elektrodenplatte übertragen wird, wobei eine Fläche der vorstehenden Abschnitte (21), die auf die Elektrodenplatte übertragen wird, 1 % bis 20 % einer Fläche der Elektrodenplatte ausmacht,
vorzugsweise die Fläche der auf die Elektrodenplatte übertragenen vorstehenden Abschnitte (21) 5 % bis 15 % der Fläche der Elektrodenplatte beträgt.

14. Herstellungsverfahren für den Separator mit sowohl ausgezeichneter Verbindungseigenschaft als auch Luftdurchlässigkeit nach Anspruch 10, wobei in Schritt S2 eine Rührgeschwindigkeit des Rührens zum Bilden der gleichmäßigen Klebstoffaufschlämmung 700 U/min beträgt.

## Revendications

1. Séparateur ayant à la fois un excellent pouvoir liant et une excellente perméabilité à l'air, **caractérisé en ce qu'**il comprend :
un film de base (10) ; et
une couche liante, dans lequel la couche liante est prévue sur au moins une surface du film de base (10), et la couche liante comprend une pluralité de structures creusées (20) et un liant, chacune des structures creusées (20) est fixée sur une surface du film de base (10), et la structure creusée (20) est formée par une portion en saillie (21) entourant une portion creusée (22) ;
en considérant la surface du film de base (10) comme étant un plan horizontal, une section transversale de la portion en saillie (21) perpendiculaire à la surface du film de base (10) est d'une structure accumulatrice de type arête ; et
les portions en saillie (21) comprennent :
des particules primaires (211), dans lequel les particules primaires (211) sont des particules PVDF ; et
des particules secondaires (212), dans lequel les particules secondaires (212) sont des particules sphériques formées en accumulant les particules primaires (211), et les particules secondaires (212) sont accumulées pour former la structure accumulatrice de type arête.

2. Séparateur ayant à la fois un excellent pouvoir liant et une excellente perméabilité à l'air selon la revendication 1, dans lequel une taille de particule D50 des particules primaires (211) est de 50 à 500 nm, et une taille de particule D50 des particules secondaires (212) formées en accumulant les particules primaires (211) est de 0,5 à 20 µm.

3. Séparateur ayant à la fois un excellent pouvoir liant et une excellente perméabilité à l'air selon la revendication 1 ou 2, comprenant en outre :
une couche de particules inorganiques, dans lequel la couche de particules inorganiques est prévue sur le film de base (10), et la couche de particules inorganiques est située entre la couche liante et le film de base (10).

4. Séparateur ayant à la fois un excellent pouvoir liant et une excellente perméabilité à l'air selon la revendication 1 ou 2, dans lequel les portions creusées (22) sont de forme ovale, et une valeur moyenne de longs axes de plusieurs ellipses est dans une plage de 50 à 1000 µm.

5. Séparateur ayant à la fois un excellent pouvoir liant et une excellente perméabilité à l'air selon la revendication 1, dans lequel les portions creusées (22) sont de forme irrégulière, et une valeur moyenne d'un diamètre de cercle équivalent de la forme irrégulière est dans une plage de 50 à 1000 µm.

6. Séparateur ayant à la fois un excellent pouvoir liant et une excellente perméabilité à l'air selon l'une quelconque des revendications 1 à 5, dans lequel une hauteur des portions en saillie (21) est dans une plage de 2 à 15 µm.

7. Séparateur ayant à la fois un excellent pouvoir liant et une excellente perméabilité à l'air selon la revendication 6, dans lequel la hauteur des portions en saillie (21) est dans une plage de 5 à 10 µm.

8. Séparateur ayant à la fois un excellent pouvoir liant et une excellente perméabilité à l'air selon l'une quelconque des revendications 1 à 7, dans lequel une quantité de chargement de la couche liante est de 0,2 à 4 g/m².

9. Séparateur ayant à la fois un excellent pouvoir liant et une excellente perméabilité à l'air selon la revendication 8, dans lequel la quantité de chargement de la couche liante est de 0,58 à 1,66 g/m².

10. Procédé de préparation pour le séparateur ayant à la fois un excellent pouvoir liant et une excellente perméabilité à l'air selon l'une quelconque des revendications 1 à 9, **caractérisé en ce qu'**il comprend les étapes suivantes :
S1, la préparation des particules primaires (211) de PVDF par polymérisation en émulsion, une taille de particule D50 des particules primaires (211) étant de 50 à 500 nm, et la granulation par pulvérisation des particules primaires (211) pour préparer les particules secondaires (212), une taille de particule D50 des particules secondaires (212) étant de 0,5 à 20 µm ;
S2, le mélangeage des particules secondaires (212), d'un liant, et d'eau désionisée selon des proportions de poids prédéfinies, et l'agitation de ceux-ci pour former une bouille adhésive uniforme ;
S3, la pulvérisation de la bouillie adhésive sur une seule surface du film de base (10) en utilisant une tête de pulvérisation rotative, dans lequel un débit de pulvérisation de la tête de pulvérisation rotative est de 50 à 500 mL/min, et une vitesse de rotation de la tête de pulvérisation rotative est de 1 000 à 20 000 tr/min ; et
S4, le séchage suffisant du séparateur revêtu à une température de 60 à 80 °C, dans lequel la bouillie adhésive revêtue est formée en une couche liante après un séchage, et le séparateur est obtenu après le séchage.

11. Procédé de préparation pour le séparateur ayant à la fois un excellent pouvoir liant et une excellente perméabilité à l'air selon la revendication 10, dans lequel une teneur en solides de la bouillie adhésive est de 10 % à 30 %, et une masse du liant constitue de 1 % à 20 % d'une masse des particules secondaires (212),
de préférence, la teneur en solides de la bouillie adhésive est de 10 % à 20 %, et la masse du liant constitue de 1 % à 7,5 % de la masse des particules secondaires (212).

12. Procédé de préparation pour the séparateur ayant à la fois un excellent pouvoir liant et une excellente perméabilité à l'air selon l'une quelconque des revendications 10 à 11, dans lequel des microsphères de PMMA sont en outre ajoutées dans l'étape S2, une taille de particule D50 des microsphères de PMMA étant de 1 à 15 µm, et une bouillie adhésive uniforme est formée par agitation,
de préférence, la taille de particule D50 des microsphères de PMMA est de 1 à 5,8 µm.

13. Procédé de préparation pour le séparateur ayant à la fois un excellent pouvoir liant et une excellente perméabilité à l'air selon la revendication 12, dans lequel une surface d'extrémité du séparateur pourvue de la couche liante et une plaque électrode sont fixées et puis soumises à un pressage à chaud, et une partie des portions en saillie (21) sur la couche liante, lors du pressage à chaud, est transférée depuis le film de base (10) sur la plaque électrode, dans lequel une superficie des portions en saillie (21) transférée sur la plaque électrode constitue de 1 % à 20 % d'une superficie de la plaque électrode,
de préférence, la superficie des portions en saillie (21) transférées sur la plaque électrode constitue de 5 % à 15 % de la superficie de la plaque électrode.

14. Procédé de préparation pour le séparateur ayant à la fois un excellent pouvoir liant et une excellente perméabilité à l'air selon la revendication 10, dans lequel, dans l'étape S2, une vitesse d'agitation de l'agitation pour former la bouillie adhésive uniforme est de 700 tr/min.
